# EUROPÄISCHE PATENTANMELDUNG

(11) **EP 4 324 771 A1**
(43) Veröffentlichungstag der Anmeldung: **21.02.2024**
(21) Anmeldenummer: 22190836.1
(22) Anmeldetag: 17.08.2022
(51) Int. Cl.: B65G 47/51, B65G 47/64

(54) **BANDPUFFER FÜR EINE PRODUKTFÖRDEREINRICHTUNG**

(71) Anmelder: Rotzinger AG, 4303 Kaiseraugst (CH)
(72) Erfinder: Kurt, Philipp, 79639 Grenzach-Wyhlen (DE)
(74) Vertreter: Braunpat AG

(57) **Zusammenfassung**

Die Erfindung betrifft einen Bandpuffer für eine Produktfördereinrichtung, die Produkte (13) von einer Produktionsanlage mittels Förderbänder (1, 2) zu wenigstens einer Weiterverarbeitungsanlage fördert. Der Bandpuffer weist wenigstens zwei Pufferbänder auf, die Produkte (13) speichern und vertikal übereinander angeordnet sind. Die Pufferbänder weisen jeweils einlaufseitig eine erste vertikal schwenkbare Bandumlenkung (5) zum wahlweisen Anschliessen an ein Einlaufband (3) und auslaufseitig eine zweite vertikal schwenkbare Bandumlenkung (6) zum wahlweisen Anschliessen an ein Auslaufband (4) aufweisen. Der Bandpuffer kann die Produkte (13) in einem First in First out Verfahren durch den Puffer fördern.

## Beschreibung

### Technisches Gebiet der Erfindung

Die Erfindung betrifft einen Bandpuffer für eine Produktfördereinrichtung, eine Produktfördereinrichtung mit einem solchen Bandpuffer und ein Verfahren zum Zwischenspeichern von Produkten mittels eines solchen Bandpuffers. Insbesondere betrifft die Erfindung einen Bandpuffer und eine Produktfördereinrichtung für Stückgut aus der Lebensmittelindustrie, die zeitnah verarbeitet werden sollen.

### Stand der Technik

Bei der Herstellung von Stückgütern mittels Produktionslinien ist es üblich Puffer zur Prozessentkopplung und Effizienzsteigerung einzusetzen. Dabei sind insbesondere in der Lebensmittelindustrie Qualitätsstandards zu berücksichtigen. In den Produktionslinien werden die in Reihen produzierten Stückgüter von einer Produktionsanlage, wie z. B. einem Ofen oder einer Giessanlage, mit einem breiten Hauptband übernommen und sollen auf kurzem Weg zu einer Verpackungsanlage zugeführt werden. Dabei handelt es sich beispielsweise um Biskuits, Schokoladetafeln oder Schokoriegel.

Je nach Produktionsleistung sind mehrere Verpackungslinien nötig, um eine produzierte Menge, mit möglichst geringer Ausschussquote zu verpacken. Eine Verpackungslinie besteht hierbei aus mehreren in Reihe geschalteten Verpackungsmaschinen, wie zum Beispiel einer Schlauchpackmaschine an erster Stelle, einer Multipackmaschine an zweiter Stelle, einem Kartonierer an dritter Stelle und zuletzt einem Palettierer. Wenn nun eine der Maschinen in dieser Linie wegen einer Störung stoppt, dann fällt die ganze Linie aus. Damit bei konstanter Produktion kein Überlauf entsteht, muss entweder eine zusätzliche sogenannte Standby-Verpackungslinie einspringen oder ein Puffer nimmt die überzähligen Produkte auf, sodass ein Überlauf von Produkten (Ausschuss) vermieden werden kann.

Aus dem Stand der Technik sind Bandpuffer bekannt, die sich am Ende einer Zufuhrlinie befinden und so den Überlauf an Produktreihen aufnehmen können, die nicht den vorgeschalteten Verpackungsmaschinen zugeteilt werden können. Ein Überlauf an Produktreihen kann entstehen, wenn die von der Zufuhrlinie zu beschickenden Verpackungslinien gestoppt sind, und somit die zugeführten Produktreihen nicht zugeteilt werden können. Für die Zuteilung der Produktreihen werden aus dem Stand der Technik bekannte Queraustragestationen eingesetzt, die auf Anforderung der jeweiligen Verpackungslinie, immer die nächste Produktreihe aus dem kontinuierlich zugeführten Fluss entnehmen können. Dabei werden die auf den Hauptbändern ankommenden Produktreihen auf ein unterhalb der Förderebene der Hauptbänder angeordnetes Queraustrageband gefördert.

Dieses Queraustrageband ist quer zur Hauptförderrichtung angeordnet und fördert die Produktreihen in Richtung der Verpackungsmaschinen. Um einen lückenlosen kontinuierlichen Produktfluss zu den Verpackungsmaschinen zu generieren, sind dem Queraustrageband noch mehrere kurze Lückenschliessbänder nachgeschaltet. Die vorgängig erwähnte Zuteilung der Produktreihen zu den Verpackungslinien in der Queraustragestation erfolgt zumeist durch eine kombinierte Absenk -und Rückzugsbewegung der auslaufseitigen Bandnase des Hauptbands der Queraustragestation. Eine typische Zufuhrlinie umfasst eine Linienkopfstation, nachfolgend in Reihe geschaltete Queraustragestationen und am Linienende einen Bandpuffer, um den Überlauf an Produktreihen aufzunehmen.

Hierbei werden im Linienkopf die frisch produzierten Produktreihen synchronisiert von der Produktionsanlage übernommen und mit kurzen Bändern zueinander separiert und in einen regelmässigen kontinuierlichen Produktfluss überführt. Ausserdem werden die Produktreihen mittels Sensoren erfasst und inspiziert, indem deren Länge, Höhe und Beabstandung zur benachbarten Produktreihe gemessen wird. Ausserdem können die Produktreihen noch ausgerichtet und auf Metallkontamination überprüft werden. Nicht akzeptable Reihen werden über eine Rückzugsbewegung oder eine vertikale Schwenkbewegung der auslaufseitigen Bandnase eines Hauptbands im Linienkopf auf ein unterhalb und quer zur Hauptförderrichtung liegendes Ausschleusband ausgeworfen. Alle Produktreihen, die dann im Weiteren nicht durch die nachgeschalteten Queraustragestationen zu den Verpackungsmaschinen zugeteilt werden können, werden dann als Überlauf dem am Linienende angeordneten Bandpuffer zugeführt.

Diese Bandpuffer aus dem Stand der Technik funktionieren nach dem First in Last out - Prinzip (FiLo-Prinzip). Ein solcher Bandpuffer ist z. B. aus WO 2022/117606 A1 bekannt. Alle Pufferbänder sind dabei reversierbar ausgeführt, d. h. dass bei der Aufnahme von Produktreihen die Pufferbänder in Hauptförderrichtung laufen und bei der Abgabe von Produktreihen entgegen (revers) der Hauptförderrichtung. Hierbei bedeutet die Aufnahme von Produktreihen Einspeichern und die Abgabe von Produktreihen bedeutet Ausspeichern aus dem Puffer. Ausserdem heisst das, dass sich Zufuhr und Abfuhr des Bandpuffers im Einlaufbereich des Bandpuffers befinden.

Diese Bandpuffer am Ende der Zufuhrlinie bestehen aus ein -oder mehrlagig übereinander liegenden stationären Hauptbändern, die als Pufferbänder reversierbar betrieben werden müssen. Diese vertikal übereinander liegenden Pufferbänder werden zumeist über ein vorgeschaltetes vertikal schwenkbares Hauptband angedient und mit dem vorgelagerten Zufuhrsystem verbunden. Auch dieses Band muss reversierbar in Hauptförderrichtung und entgegen der Hauptförderrichtung betrieben werden können. Diese Pufferbänder am Linienende sind typischerweise fächerförmig übereinander angeordnet. Somit haben dann die oberhalb der Zufuhrebene liegenden Bänder eine Steigung von bis zu 10° nach oben und die unterhalb der Zufuhrebene liegenden Bänder ein Gefälle von bis zu 10° nach unten. Damit können die Einläufe dieser Pufferbänder mit einem kleinen vertikalen Abstand zueinander angeordnet werden, sodass das vorgelagerte schwenkbare Hauptband mit einem kurzen Vertikalhub die verschiedenen Pufferebenen dann auch bei hohen Reihenleistungen mit Produktreihen andienen kann.

Eine Hauptanforderung an einen derartigen First in Last out-Bandpuffer ist die Rückführung von Produktreihen während der Produktion entgegen der Hauptförderrichtung auf die direkt vorgeschalteten Verpackungslinien. Das regelmässige Zurückführen von Produktreihen aus dem Bandpuffer zu den vorgeschalteten Verpackungslinien nennt man im Fachjargon «Refeed». Dieser Refeed dient der Entleerung des Bandpuffers. Damit kann bei steigendem Füllgrad des Bandpuffers einer drohenden Überfüllung entgegengewirkt werden. Typischerweise koppelt man die Refeedquote mit dem Füllgrad des Bandpuffers. Je höher der Füllgrad desto höher die Refeedquote. Für den Refeed müssen in den zulaufenden Produktfluss systematisch Lücken generiert werden, in die dann die Refeedreihen zu der dem Bandpuffer vorgeschalteten Verpackungslinie zugeteilt werden müssen. Als Erfahrungswert wird eine Refeedquote von mindestens 20% benötigt, um den Bandpuffer in nützlicher Frist zu entleeren. Die Refeedquote ist hierbei die Überkapazität der installierten Verpackungsleistung bezogen auf die Produktionsleistung. Die installierte Verpackungsleistung ist die Summe der Leistung aller Verpackungslinien.

Ein Nachteil dieser Bandpuffer am Linienende ist der systembedingte Betrieb nach dem FiLo-Prinzip. Das hat zur Folge, dass die ersten eingespeicherten Produktreihen erst wieder als Letzte über den Refeed-Prozess in die Verpackung gelangen. In der Realität bedeutet das oft, dass die Produkte stundenlang unverpackt im Speicher liegen, was der Produktqualität und der Produktsicherheit nicht zuträglich ist. Ausserdem müssen die Pufferbänder zum Einspeichern und Ausspeichern taktweise und reversierbar betrieben werden. Da die Pufferbänder, wie vorgängig beschrieben, geometrisch in Schräglage angeordnet sind, haben die Produktreihen viel weniger Reibung auf der Gurtoberfläche. In Kombination mit dem reversierenden Taktbetrieb der Pufferbänder können die Produkte sehr leicht verrutschen. Dies führt wiederum zu Folgestörungen und Produktverlust.

Es ist daher die Aufgabe der vorliegenden Erfindung, einen Bandpuffer für eine Produktfördereinrichtung und ein Verfahren zum Zwischenspeichern von Produkten während der Verarbeitung bereitzustellen, die eine Produktqualität und - sicherheit sicherstellen, ein zeitnahes Verarbeiten von Produkten ermöglichen und eine flexible Ausgestaltung der Produktfördereinrichtung erlauben. Insbesondere soll der Bandpuffer am Linienende sowie auch am Anfang der Linie einer Produktfördereinrichtung einsetzbar und so in den Produktfluss eingebunden sein, dass die beschriebenen Nachteile vermieden werden können.

### Zusammenfassung der Erfindung

Gemäss der vorliegenden Erfindung wird diese Aufgabe durch einen Bandpuffer nach Anspruch 1, eine Produktfördereinrichtung nach Anspruch 11 und ein Verfahren zum Zwischenspeichern von Produkten nach Anspruch 14 gelöst. Vorteilhafte Ausgestaltungen und unterschiedliche Ausführungsformen der Erfindung gehen aus den Unteransprüchen hervor.

Ein Bandpuffer nach der vorliegenden Erfindung, der für eine Produktfördereinrichtung ausgestaltet ist, die Produkte von einer Produktionsanlage mittels Förderbändern zu wenigstens einer Weiterverarbeitungsanlage fördert, weist wenigstens zwei Pufferbänder zum Speichern von Produkten auf. Die Produkte liegen beispielsweis in Form von Stückgut vor und sind beispielsweise in Produktreihen angeordnet, die zueinander entsprechend Anforderungen der Produktfördereinrichtung und der Weiterverarbeitungsanlage beabstandet sein können. Die Pufferbänder sind insbesondere dazu ausgelegt, die von einer Weiterverarbeitungsanlage nicht aufnehmbaren Produkte zu speichern. Die wenigstens zwei Pufferbänder sind vertikal übereinander angeordnet. Jedes der Pufferbänder weist eine vertikal schwenkbare Bandumlenkung zum wahlweisen Anschliessen an ein Förderband auf, um Produkte aufzunehmen. Erfindungsgemäss weisen die Pufferbänder jeweils einlaufseitig eine erste vertikal schwenkbare Bandumlenkung zum wahlweisen Anschliessen an ein Einlaufband und auslaufseitig eine zweite vertikal schwenkbare Bandumlenkung zum wahlweisen Anschliessen an ein Auslaufband auf. Die Bandumlenkungen der Pufferbänder sind als flächige Flügel ausgebildet, die an einem Ende um eine horizontal verlaufende stationäre Schwenkachse schwenkbar sind. Das andere Ende der Flügel, bzw. der Bandumlenkungen, ist somit frei und kann vertikal nach oben und unten verschwenk werden, um an ein Ein-, bzw. Auslaufband anzuschliessen. Das Einlaufband und das Auslaufband können als Förderbänder zum Transport der Produkte entlang einer Produktionslinie der Produktfördereinrichtung dienen, wobei die Produkte entlang der Produktionslinie in einer Haupttransportrichtung von der Produktionsanlage zu einer Weiterverarbeitungsanlage, insbesondere zu einer Verpackungsanlage geführt werden. Vorteilhaft kann der Bandpuffer selbst ein Einlaufband und ein Auslaufband aufweisen, wobei das Einlaufband mit der ersten vertikal schwenkbaren Bandumlenkung und das Auslaufband mit der zweiten vertikal schwenkbaren Bandumlenkung versehen ist.

Gemäss einem erfindungsgemässen Verfahren zum Zwischenspeichern von Produkten während einer Produktförderung durch die Produktfördereinrichtung erfolgt ein Produkteinlauf in den Bandpuffer und ein Produktauslauf aus dem Bandpuffer an unterschiedlichen vertikal übereinander angeordneten Pufferbändern. Das heisst, während Produkte vom Einlaufband einem ersten Bandpuffer zugeführt werden, werden Produkte am Produktauslauf von einem anderen, zweiten Bandpuffer zum Auslaufband abgeführt. Dadurch entsteht eine Entkopplung des Produkteinlaufs vom Produktauslauf und eine maximale Flexibilität in der Zuordnung von an Pufferbänder angediente Produkte unabhängig vom Abführen der Produkte aus dem Bandpuffer. Grundsätzlich ist es durchaus denkbar, dass ein Zuführen und Abführen über das selbe Pufferband erfolgen kann. In diesem Fall ist das Pufferband mit einem Förderband zum Produkttransport vergleichbar. Eine gewisse Pufferfunktion kann durch Verkürzung von Produktabständen auf dem Pufferband im Vergleich zu Produktabständen auf dem Einlaufband erreicht werden. Die Pufferkapazität ist in diesem Fall jedoch geringer. Die Auswahl des angedienten Pufferbands und des abführenden Pufferbands kann mittels einer Steuerung des Bandpuffers, bzw. der Produktfördereinrichtung, durchgeführt werden. Die Steuerung regelt das Schwenken der Bandumlenkungen und stellt sicher, dass ein freies Ende einer einlaufseitigen Bandumlenkung mit dem Einlaufband, bzw. ein freies Ende einer auslaufseitiges Bandumlenkung mit dem Auslaufband nivelliert wird.

Mit dem erfindungsgemässen Bandpuffer ist es möglich, gespeicherte Produkte nach dem First in First out Prinzip (FiFo-Prinzip) einer Weiterverarbeitungsanlage zuzuführen. Der Bandpuffer kann flexibel in den Produktfluss eingeschlauft werden. Er kann am Linienanfang, mittig in der Linie sowie auch am Linienende positioniert werden. Speziell am Linienende ist das vorgeschlagene Bandpufferkonzept im Bereich Produktqualität und -sicherheit und Produkthandling aufgrund des FiFo-Prinzips vorteilhaft. Übermässig lange Verweilzeiten der Produkte im Bandpuffer werden durch das FiFo-Prinzip vermieden. Durch die mehrlagige Ausführung der Pufferbänder und die Integration der Bandumlenkungen am Ein -und Auslauf hat der Bandpuffer eine kurze Baulänge und dennoch eine hohe Pufferkapazität.

Es können verschiedene Ausführungsformen des Bandpuffers mit unterschiedlicher Anzahl an Pufferbändern zur Verfügung gestellt werden, je nach erforderlicher Pufferkapazität. Als minimale Ausführungsform sind nur zwei Pufferbänder vorgesehen. Vorteilhaft werden vier Pufferbänder verwendet, um die Kapazität des Speichers zu erhöhen. Es können aber auch mehr als vier, beispielsweise sechs, sieben oder acht Pufferbänder eingebunden werden. Wesentlich ist, dass eine Neigung der Pufferbänder bei der Aufnahme und Abgabe von Produkten nicht zu gross wird, um ein Verrutschen der Produkte auf den Pufferbändern zu vermeiden.

Ferner kann der Bandpuffer zwei Einlaufbänder und/oder zwei Auslaufbänder jeweils vertikal übereinander angeordnet aufweisen, wobei jedes der Einlaufbänder und/oder der Auslaufbänder an eine der übereinander angeordneten einlaufseitige Bandumlenkungen, bzw. auslaufseitige Bandumlenkungen anschliessbar ist. Auf diese Weise kann der Bandpuffer z. B. Produkte von zwei verschiedenen Produktionsanlagen, bzw. verschiedenen Produktionslinien, speichern.

In einer vorteilhaften Ausführungsform des Bandpuffers nach der vorliegenden Erfindung sind die einlaufseitige Bandumlenkung und die auslaufseitige Bandumlenkung unabhängig voneinander steuerbar. Demnach kann z. B. zunächst lediglich ein Einspeichern erfolgen, ohne dass gleichzeitig ein Ausspeichern erforderlich ist. Es können zunächst mehrere Pufferbänder befüllt werden, bevor ein Ausspeichern veranlasst wird. Es kann auch gleichzeitig ein Ein- und ein Ausspeichern erfolgen. Zudem können die Geschwindigkeiten der Produkte auf den Pufferbändern beim Einspeichern und beim Ausspeichern unabhängig geregelt werden und es kann ein Taktabstand der Produkte an Anforderungen der Weiterverarbeitungsanlage angepasst werden.

Bei einer weiteren Ausführungsform des Bandpuffers nach der Erfindung sind wenigstens zwei vertikal übereinander angeordnete Bandumlenkung miteinander gekoppelt. Daher kann die Anzahl an Schwenkantrieben zum Schwenken der Bandumlenkungen relativ zueinander und die Steuerung der Bandumlenkungen reduziert werden. Die Kopplung kann z. B. mechanisch erfolgen, etwa durch Kopplungsstreben, welche die übereinander angeordneten Bandumlenkungen gelenkig miteinander verbinden, oder durch eine elektronische Kopplung durch die Steuerung. Es können auf der Einlaufseite und/oder der Auslaufseite auch Untergruppen von Bandumlenkungen miteinander gekoppelt sein. Beispielsweise können im Fall von vier Pufferbändern, die oberen zwei Bandumlenkungen und die unteren zwei Bandumlenkungen gekoppelt sein, wobei die obere von der unteren Bandumlenkungsgruppe unabhängig sein kann. Dadurch kann eine flexible Ausnutzung des Bandpuffers und auch eine effiziente Betriebsweise erreicht werden.

In noch einer weiteren Ausführungsform des Bandpuffers nach der Erfindung sind das Einlaufband, die Pufferbänder und das Auslaufband in Serie hintereinander angeordnet. Vorteilhaft sind dabei das Einlaufband und das Auslaufband auf einer Ebene angeordnet. Einlaufband, Pufferbänder und Auslaufband sind somit entlang einer Haupttransportrichtung der Produktfördereinrichtung ausgerichtet. Die Produkte können vom Auslaufband in derselben Transportrichtung an Förderbänder der Produktfördereinrichtung abgegeben werden. Somit entspricht eine Einlaufförderrichtung von der Produktionsanlage einer Auslaufförderrichtung zur Weiterverarbeitungsanlage. Dadurch entsteht ein kontinuierlicher Produktfluss, ohne dass ein Reversieren der Transportbewegung des Pufferbands, des Auslaufbandes oder des sich daran anschliessenden Förderbandes notwendig ist. Es ist kein Einspeichern oder Ausspeichern der Produkte entgegen der Haupttransportrichtung erforderlich. Diese Variante kommt zum Beispiel zum Tragen, wenn der Bandpuffer am Anfang oder mittig in einer Produktlinie positioniert ist.

Bei einer anderen Produktfördereinrichtung kann der Bandpuffer am Ende der Förderlinie hinter der Produktionsanlage und hinter Produktaustragsstationen, die Produkte von der Förderlinie zu einer Weiterverarbeitungsanlage ableiten, vorgesehen sein. In dieser Ausführungsform ist eine Auslaufförderrichtung aus dem Bandpuffer entgegengesetzt zu einer Einlaufförderrichtung in den Bandpuffer vorgesehen. Hierbei kann zumindest eines der Pufferbänder und das Auslaufband reversibel antreibbar ausgebildet sein. Vorteilhaft ist das unterste Pufferband reversibel vorgesehen, wodurch die reversierten Produkte unterhalb der übrigen Pufferbänder und unterhalb des Einlaufbands ausgespeichert werde können. Es kann aber auch jedes andere der vorhandenen Pufferbänder zur Rückführung von Produkten reversibel ausgebildet sein. Diese Ausführungsform kommt z. B. zum Einsatz, wenn der Bandpuffer am Ende einer Produktlinie positioniert ist und die Produkte entgegen der Haupttransportrichtung zurück auf Förderbänder abgeführt werden sollen, welche die Produkte zu den Weiterverarbeitungsanlagen bringen.

In diesem Fall werden die Produkte in Haupttransportrichtung vom Einlaufband auf eines der oberen Pufferbänder abgegeben und in Haupttransportrichtung über dieses Pufferband gefördert. Sobald dieses Pufferband voll ist und Produkte ausgespeichert werden sollen, werden Produkte am gegenüberliegenden Ende des Pufferbandes auf das Auslaufband abgegeben. Dabei läuft das Auslaufband zunächst in Haupttransportrichtung, um eine oder mehrere Reihen von Produkten aufzunehmen. Zur Rückführung in die Produktlinie kehrt die Bewegungsrichtung des Auslaufbands um und die Produkte können auf das reversierbare unterste Pufferband abgegeben werden. Auf dem Pufferband laufen die Produkte entgegen der Haupttransportrichtung in Richtung des Einlaufbandes. Am Ende des Pufferbands können die Produkte an ein Förderband der Produktfördereinrichtung abgegeben werden, das beispielsweise zu einer Austragstation gehört und die Produkte von der Produktionslinie zu einer Weiterverarbeitungsanlage austrägt. Es ist auch möglich, dass auch das Einlaufband reversierbar ausgebildet ist. In diesem Fall können die vom untersten Pufferband zurückgeführten Produkte in ihrer reversierten Bewegungsrichtung vom Einlaufband aufgenommen werden. Sie können dann z. B. einem anderen Pufferband in Haupttransportrichtung zugeführt werden, so dass das Produkt den Bandpuffer nochmals durchläuft, oder es kann z. B. mittels einer Austragsstation an eine Weiterverarbeitungsanlage abgeführt werden.

Durch die Reversibilität zumindest des Auslaufbandes und eines der Pufferbänder kann der Bandpuffer flexibel in der Produktionslinie positioniert werden, ohne dass auf das FiFo-Prinzip für das Ausspeichern der Produkte verzichtet werden muss. Ferner kann ein ständiges Reversieren auf den Pufferbändern zur Ausbildung einer gewünschten Taktung der Produkte vermieden werden. Ein getaktetes Reversieren reduziert sich auf das Auslaufband und ggf. das Einlaufband. Da diese Bänder jedoch horizontal liegen ist der ruckartige Reversierbetrieb nicht so kritisch wie bei den geneigten Bändern der Bandumlenkungen, da die Haftung der Produkte auf den horizontalen Bändern maximal ist. Dadurch ist ein mögliches Verrutschen der Produkte stark reduziert und somit die Effizienz des Bandpuffers erhöht.

In einer zusätzlichen Ausführungsform des Bandpuffers nach der Erfindung sind schwenkbare Bereiche der Pufferbänder, die unterhalb einer Ebene des Einlaufbands und/oder des Auslaufbands angeordnet sind, als autonome, d.h. getrennte, Förderbänder ausgebildet. Zumindest die schwenkbaren Bereiche der Bandumlenkungen dieser Pufferbänder sind als schwenkbare Förderbänder vorgesehen. Dadurch kann die aktive Förderung der Produkte auf eine ansteigende Bandumlenkung unterstützt werden.

Bei einer Ausführungsform des Bandpuffers nach der vorliegenden Erfindung sind die einlaufseitigen Bandumlenkungen vertikal über das Einlaufband schwenkbar. Somit ist keines der Pufferbänder an das Einlaufband angeschossen und es entsteht eine Lücke zwischen dem Ende des Einlaufbandes und den Enden der Pufferbänder. Produktausschuss oder eine Überproduktion kann durch diese Lücke von der Produktlinie entsorgt werden.

Die übereinander angeordneten Pufferbänder sind im Wesentlichen identisch ausgebildet. Sie weisen jeweils ein horizontales stationäres Förderchassis auf, an dessen einer Seite die einlaufseitige Bandumlenkung und an dessen anderer Seite die auslaufseitige Bandumlenkung schwenkbar gelagert sind. Die einlaufseitige und die auslaufseitige Bandumlenkung sind im Wesentlichen gleich ausgebildet, insbesondere weisen sie die gleiche Länge auf. Die Pufferbänder sind spiegelsymmetrisch zu einer Mittelachse ihres Förderchassis ausgebildet. Die freien Enden der Bandumlenkungen sind in bekannter Weise ausgebildet, um eine Produktaufnahme, bzw. eine Produktabgabe zu erleichtern. Die Länge des Förderchassis kann an vorgegebene Räumlichkeiten oder gewünschte Pufferkapazitäten und Verweilzeiten angepasst werden. Die Länge der Bandumlenkungen kann an Vorgaben in Bezug auf eine maximal zulässige Neigung der Pufferbänder angepasst werden.

Zusammenfassend erfolgt bei dem Verfahren zum Zwischenspeichern von Produkten während einer Produktförderung durch eine Produktfördereinrichtung nach der vorliegenden Erfindung ein Produkteinlauf in den Bandpuffer und ein Produktauslauf aus dem Bandpuffer von unterschiedlichen vertikal übereinander angeordneten Pufferbändern. Dabei können Produkte dem Bandpuffer über das Einlaufband in einer Förderrichtung auf eine einlaufseitige Bandumlenkung eines Bandpuffers zugeführt werden und Produkte von einem anderen Pufferband über die auslaufseitige Bandumlenkung dieses anderen Pufferbands über das Auslaufband in derselben oder entgegengesetzten Förderrichtung abgeführt werden. Ein Einspeichern in den Bandpuffer und ein Ausspeichern aus dem Bandpuffer kann unabhängig gesteuert werden.

### Kurzbeschreibung der Figuren

Die Erfindung wird im Folgenden anhand der Figuren dargestellt, die lediglich zur Erläuterung dienen und nicht einschränkend auszulegen sind. Aus den Figuren offenbar werdende Merkmale der Erfindung sollen einzeln und in jeder Kombination als zur Offenbarung der Erfindung gehörend betrachtet werden. In den Zeichnungen zeigen:
Fig. 1 eine dreidimensionale schematische Darstellung einer ersten Ausführungsform eines Bandpuffers nach der vorliegenden Erfindung,
Fig. 2 eine seitliche Ansicht der ersten Ausführungsform des Bandpuffers aus Figure 1,
Fig. 3 eine Detailansicht eines Einlaufbereichs des Bandpuffers aus Figur 1,
Fig. 4 eine Detailansicht übereinander angeordneter Bandumlenkungen im Einlaufbereich des Bandpuffers aus Figur 1,
Fig. 5 eine seitliche schematische Darstellung einer zweiten Ausführungsform eines Bandpuffers nach der vorliegenden Erfindung,
Fig. 6 eine schematische Darstellung einer dritten Ausführungsform eines Bandpuffers nach der vorliegenden Erfindung,
Fig. 7 eine seitliche schematische Darstellung einer vierten Ausführungsform eines Bandpuffers nach der vorliegenden Erfindung, und
Fig. 8 eine seitliche schematische Darstellung einer fünften Ausführungsform eines Bandpuffers nach der vorliegenden Erfindung.

### Bevorzugte Ausführungsformen der Erfindung

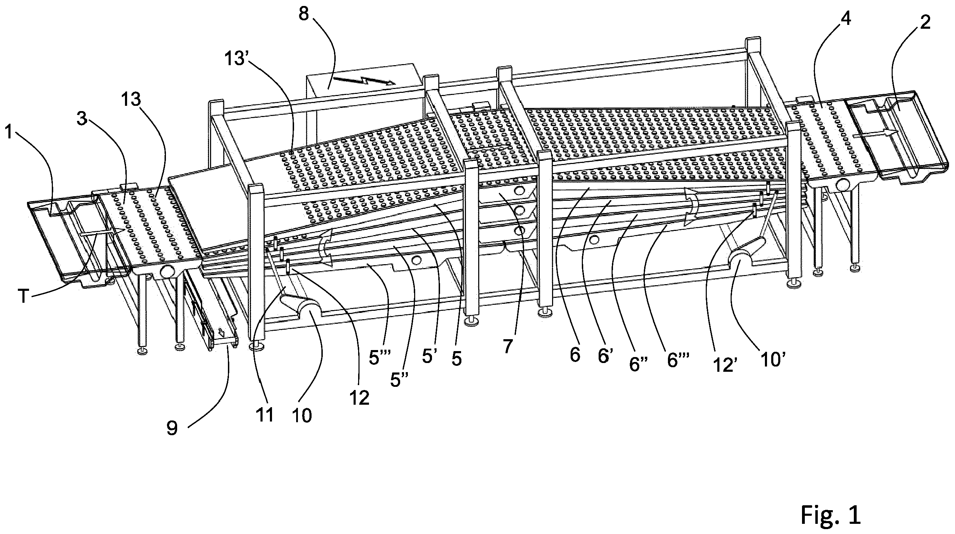

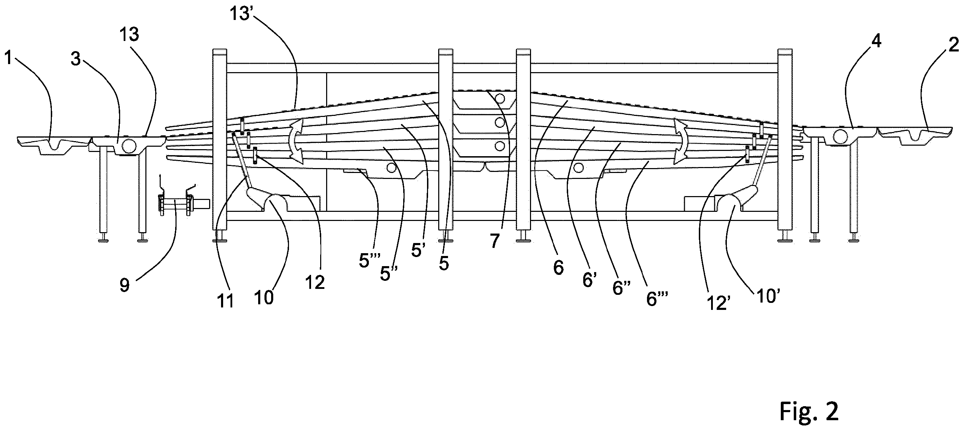

Figuren 1 und 2 zeigen eine erste Ausführungsform eines Bandpuffers nach der vorliegenden Erfindung, der für eine Produktfördereinrichtung ausgebildet ist, die Produkte entlang einer Förderlinie von einer Produktionsanlage mittels Förderbändern 1 und 2 zu wenigstens einer Weiterverarbeitungsanlage fördert. Der Bandpuffer weist in dieser Ausführungsform ein Einlaufband 3, vier vertikal übereinander angeordnet Pufferbänder, die Produkte aus der Förderlinie speichern können, und ein Auslaufband 4 auf. Wichtig zu beachten ist der Bandpuffer auch kein Einlaufband 3 oder Auslaufband 4 aufweisen könnte. Jedes der Pufferbänder weist einlaufseitig eine erste vertikal schwenkbare Bandumlenkung 5, 5', 5" bzw. 5‴ zum wahlweisen Anschliessen an das Einlaufband 3 und auslaufseitig eine zweite vertikal schwenkbare Bandumlenkung 6, 6', 6" bzw. 6‴ zum wahlweisen Anschliessen an das Auslaufband 3 auf. Die Pufferbänderweisen weiter jeweils ein horizontales stationäres Chassis 7 auf, an welchen die Bandumlenkungen mit einem Ende schwenkbar gelagert sind. Eine Steuereinheit 8 ist neben den Pufferbändern aufgestellt und dient zur Steuerung und Energieversorgung des Bandpuffers. Die Steuereinheit 8 kann eine Zentralsteuerung der Produktfördereinrichtung angeschlossen sein. Die einlaufseitigen Bandumlenkungen 5 und die auslaufseitigen Bandumlenkungen 6 können unabhängig voneinander gesteuert werden.

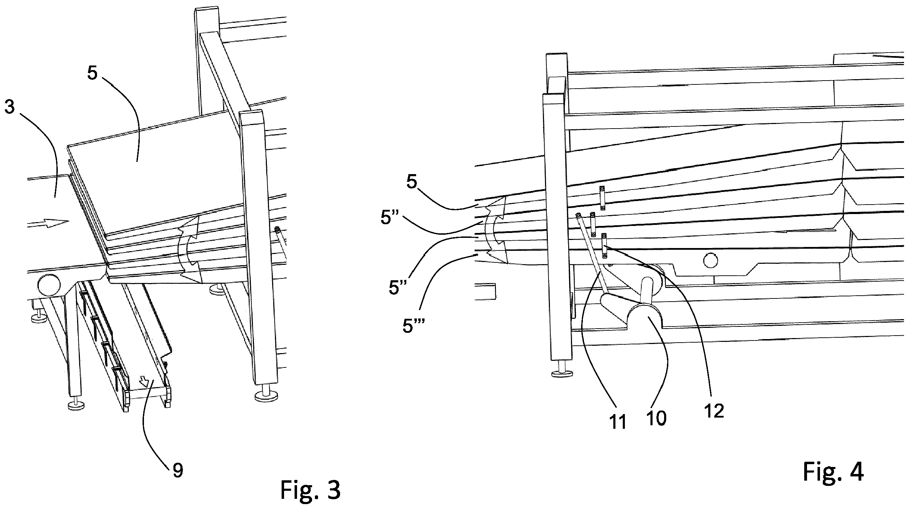

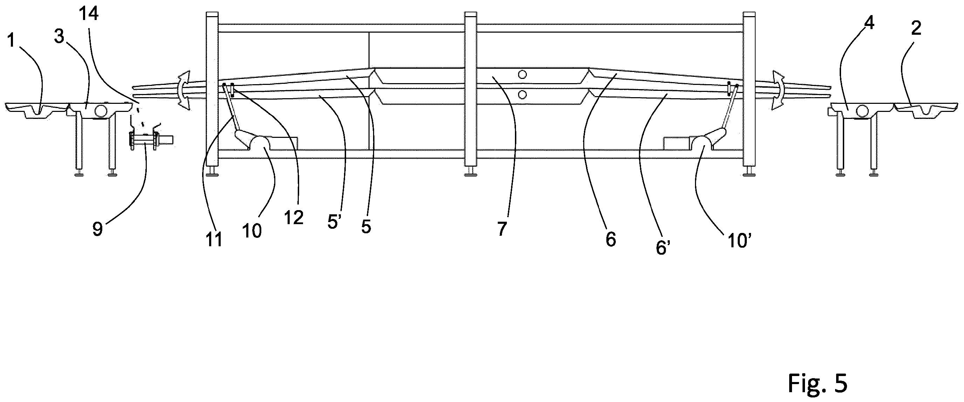

Wie in Figur 3 ersichtlich ist, ist im Einlaufbereich unterhalb des Endes des Einlaufbands 3 ein Ausschleusband 9 vorgesehen, das transversal zu einer Haupttransportrichtung der Förderlinie gemäss Pfeil T verläuft. Vom Einlaufband 3 abgegebene Produkte, die nicht von einer der einlaufseitigen Bandumlenkungen 5 aufgenommen werden, können vom Ausschleusband 9 ausgeschleust werden. Hierfür werden alle vier einlaufseitige Bandumlenkungen 5 nach oben über die Ebene des Einlaufbandes 3 geschwenkt, so dass keine der Bandumlenkungen an das Einlaufband angeschlossen sind und eine Lücke 14 entsteht (vgl. Figur 5).

Figur 4 zeigt einen Antrieb 10 und eine Kopplung der einlaufseitigen Bandumlenkungen 5. Der Antrieb 10 ist in dieser Ausführungsform des Bandpuffers als Kurbelantrieb ausgebildet, der über eine Hubmechanik 11 die Bandumlenkungen antreibt. Die Hubmechanik umfasst z. B. eine Antriebswelle mit Hebel und Kurbelstange, wobei die Antriebswelle mit einem Getriebemotor angetrieben werden kann. Grundsätzlich können auch andere Antriebe für das Schwenken der Bandumlenkungen verwendet werden. Die Bandumlenkungen sind mittels Kopplungsstreben 12 miteinander gekoppelt, so dass alle vier einlaufseitige Bandumlenkungen 5 gleichzeitig geschwenkt werden können. In analoger Weise sind ein Antrieb 10' und Kopplungsstreben 12' für die auslaufseitigen Bandumlenkungen vorhanden, die im Wesentlichen spiegelsymmetrisch zum Antrieb 10 und den Kopplungsstreben 12 ausgebildet sind.

Wie in Figur 1 ersichtlich, sind das Einlaufband 3, die Pufferbänder und das Auslaufband 4 in Serie hintereinander angeordnet. Das Einlaufband 3 und das Auslaufband 4 sind auf einer Ebene angeordnet. Produkte 13 werden in beabstandeten Reihen mittels des Einlaufbands in Transportrichtung T zu den einlaufseitigen Bandumlenkungen geführt. In dem dargestellten Betrieb des Bandpuffers werden die Produkte 13 der zweitobersten einlaufseitigen Bandumlenkung 5' angedient und von dieser auf das zweitoberste Pufferband übernommen. Gleichzeitig werden Produkte 13', die auf dem obersten Pufferband zwischengespeichert sind, von der obersten auslaufseitigen Bandumlenkung 6 auf das Auslaufband 4 abgegeben und in Haupttransportrichtung T von dem Förderband 2 zu einer Weiterverarbeitungsanlage gefördert. Es erfolgt somit ein Produkteinlauf in den Bandpuffer und ein Produktauslauf aus dem Bandpuffer von unterschiedlichen vertikal übereinander angeordneten Pufferbändern. Die Produkte werden somit nach dem FiFo-Prinzip durch den Bandpuffer gefördert.

Figur 5 zeigt eine zweite Ausführungsform eines Bandpuffers nach der Erfindung, die im Gegensatz zur ersten Ausführungsform nur zwei Pufferbänder umfasst. Die einlaufseitigen Bandumlenkungen und die auslaufseitigen Bandumlenkungen sind jeweils miteinander gekoppelt, so wie es in Figur 4 für die erste Ausführungsform beschrieben ist. In dem in Figur 5 gezeigten Verfahrensschritt sind die einlaufseitigen Bandumlenkungen 5 nach oben über die Ebene des Einlaufbandes 3 geschwenkt, so dass eine Lücke 14 zwischen dem Ende des Einlaufbandes 3 und den einlaufseitigen Bandumlenkungen 5 entsteht. Vom Einlaufband 3 geförderte Produkte 13 fallen nach unten auf das Ausschleusband 9 und werden ausgeschleust. Ein Bandpuffer mit nur zwei Pufferbändern ist z. B. bei geringen Produktionsmengen oder langsamen Produktionsprozessen hilfreich, da ein einfacher Aufbau vorliegt.

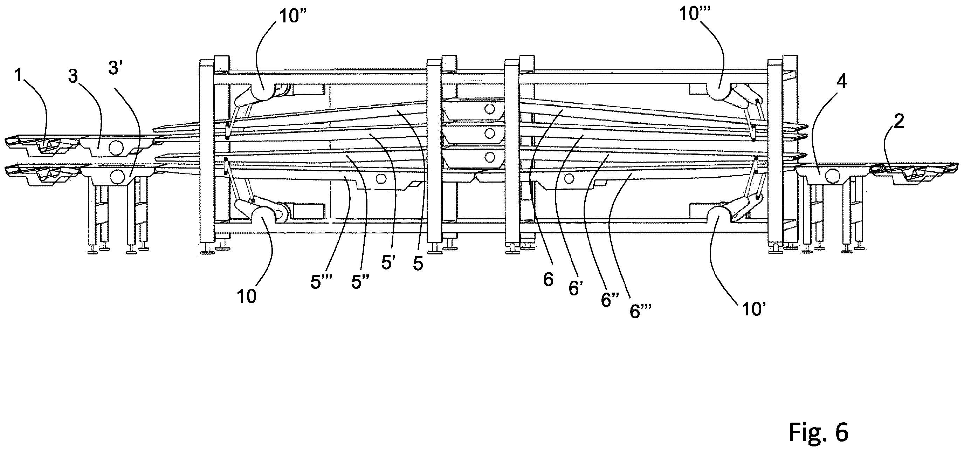

Figur 6 zeigt eine dritte Ausführungsform eines Bandpuffers nach der Erfindung, die vier Pufferbänder, zwei übereinander angeordnete Einlaufbänder 3 und 3' und ein Auslaufband 4 aufweist. Im Gegensatz zur ersten Ausführungsform sind die einlaufseitigen Bandumlenkungen 5 und die auslaufseitigen Bandumlenkung 6 zu Untergruppen mit einem gemeinsamen Antrieb zusammengefasst. Dabei sind die beiden untersten einlaufseitigen Bandumlenkungen 5" und 5'" durch einen Antrieb 10 zusammengefasst. Die beiden obersten einlaufseitigen Bandumlenkungen 5 und 5' sind durch einen Antrieb 10" zusammengefasst. Die beiden untersten auslaufseitigen Bandumlenkungen 6" und 6‴ sind durch einen Antrieb 10' zusammengefasst. Und die beiden obersten auslaufseitigen Bandumlenkungen 6 und 6' sind durch einen Antrieb 10‴ zusammengefasst.

Diese Ausführungsform des Bandpuffers kann vorteilhaft am Ende einer Produktlinie positioniert werden. Das Auslaufband 4, das unterste Pufferband und zumindest das untere Einlaufband 3' können reversibel ausgebildet sein. Produkte, die über das obere oder das untere Einlaufband angedient werden, werden vorzugsweise auf einem der drei oberen Pufferbänder eingespeichert. Sobald eines dieser Pufferbänder vollständig mit Produkten befüllt ist, können diese an das Auslaufband 4 abgegeben werden. Sobald eine Produktformation von z. B. vier Produktreihen auf dem Auslaufband 4 abgelegt ist, kann die Richtung des Auslaufbands 4 umkehren und die Produktformation kann an das unterste Pufferband abgegeben werden, welches die Produktformation entgegen der Haupttransportrichtung zum Einlaufbereich fördert. Dort kann die Produktformation an das untere Einlaufband 3' abgegeben werden, von dem sie weiter an eine Weiterverarbeitungsanlage oder an einer anderen Bandumlenkung 5, 5' oder 5" gefördert wird. Auch bei dieser Ausführungsform werden die Produkte nach dem FiFo-Prinzip durch den Bandpuffer gefördert.

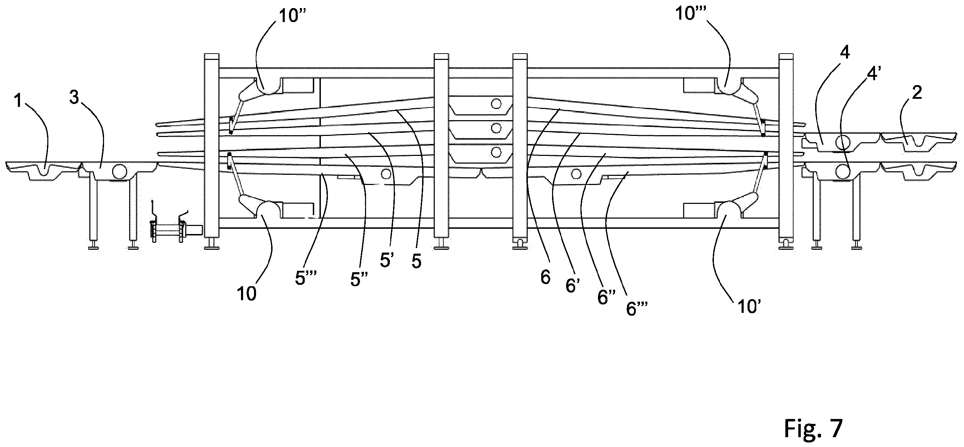

Figur 7 zeigt eine vierte Ausführungsform eines Bandpuffers nach der Erfindung mit vier Pufferbänder, die analog der dritten Ausführungsform ausgestaltet sind. Ferner sind ein Einlaufband 3 und zwei übereinander angeordnete Auslaufbänder 4 und 4' vorgesehen. Bei dieser Ausführungsform können Produkte gleichzeitig an zwei Auslaufbänder ausgespeist werden, wodurch der Bandpuffer schneller entleert werden kann.

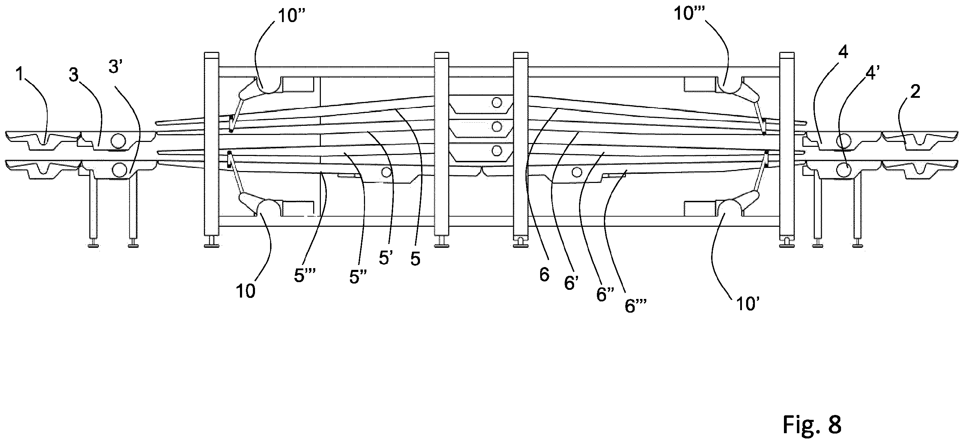

Figur 8 zeigt eine fünfte Ausführungsform eines Bandpuffers mit vier Pufferbänder, die eine Kombination der dritten und vierten Ausführungsform bildet. Es sind zwei übereinander angeordnete Einlaufbänder 3 und 3' sowie zwei übereinander angeordnete Auslaufbänder 4 und 4' vorgesehen. Diese Ausführungsform ist z. B. als Bandspeicher für zwei angeschlossene Produktionslinien geeignet. Beispielsweise können mit dieser Ausführungsform simultan Produktreihen von mehreren Einlaufebenen aufgenommen und auf mehrere Auslaufebenen abgegeben werden.

Zusammengefasst besteht der Bandpuffer nach der vorliegenden Erfindung aus mindestens zwei oder mehreren übereinander angeordneten Pufferbändern, deren einlaufseitige und auslaufseitige Endumlenkungen 5 und 6 flügelförmig ausgeformt sind. Jeder Flügel ist im jeweiligen stationären Pufferbandchassis 7 gelagert und somit um diesen Lagerpunkt vertikal schwenkbar. Diese flügelförmigen Bandumlenkungen 5 und 6 sind durch die Kopplungen 12 gelenkig miteinander verbunden, werden beispielsweise über einen Kurbeltrieb 10 vertikal schwenkbar angetrieben und bilden so eine Bandweiche mit mehreren Ebenen am Einlauf und am Auslauf des Bandpuffers.

Falls die unteren Pufferbandebenen unterhalb der Einlauf -/Auslaufebene liegen, dann bestehen die schwenkbaren Bandumlenkungen 5 und 6 dieser Pufferbandebenen an deren Ein -und Auslauf aus autonomen Förderbändern. Bei einer längeren Ausführung des Bandpuffers ist auf diesen unteren Pufferbandebenen ein Zwischenband angeordnet.

Am Einlauf des Bandpuffers können die schwenkbar ausgeführten Bandumlenkungen der Pufferbänder so weit nach oben bewegt werden, sodass eine Lücke 14 zur Einlaufebene des Einlaufbands 3 entsteht, durch die dann defekte Produktreihen nach unten auf ein quer zur Hauptförderrichtung liegendes Ausschleusband 9 ausgeworfen werden können. Diese Auswurffunktion kommt auch zum Tragen, wenn der Bandpuffer voll ist und der Überlauf ausgeschleust werden muss.

Ist nun der Bandpuffer am Anfang einer Produktlinie oder mitten in der Linie positioniert, dann wird der Produktfluss im FiFo-Prinzip durch den Puffer gefahren. Dabei werden die ankommenden Produktreihen über Einlaufbänder 3, 3' angedient und von einer Pufferbandebene übernommen. Hierbei werden die Produktreihen mit einem definierbaren Abstand zueinander so lange aufgetaktet, bis eine Pufferbandebene komplett befüllt ist und der Auslaufprozess gestartet werden kann. Danach schaltet die Weiche am Einlauf auf die nächste freie Pufferbandebene, die dann die Produktreihen von der Produktion herkommend aufnehmen kann. Damit sind der Einlauf des Bandpuffers und der Auslauf des Bandpuffers zueinander entkoppelt, weil einlaufende Produktreihen als auch aus dem Bandpuffer auslaufende Produktreihen immer von unterschiedlichen Pufferbandebenen gehandhabt werden. Somit ist es auch möglich die für dynamische Puffer typische Geschwindigkeitserhöhung des Auslaufs in Abhängigkeit des Pufferfüllstands durch die Puffersteuerung 8 auszuführen.

Wenn der Bandpuffer am Linienende positioniert wird, kann er gemäss der Erfindung ebenfalls im vorteilhaften FiFo-Prinzip betrieben werden. Hierbei dienen die oberhalb der Zufuhrebene liegenden Bänder als Pufferbänder, auf welchen die einlaufenden Produktreihen in Haupttransportrichtung aufgetaktet werden. Ist ein Pufferband befüllt, dann schaltet die vordere erste Bandweiche am Einlauf auf ein anderes leeres Pufferband und kann so den einlaufenden Produktfluss weiterhin aufnehmen. Während dessen können die Produktreihen auf den bereits befüllten Pufferbändern über die hintere zweite Bandweiche und das nachgeschaltete reversierbare Auslaufband 4 auf die unterste Pufferbandebene transferiert werden. Über diese unterste Bandebene gelangen die Produktreihen wieder zurück zum Einlauf und können über eine Schaltung der Einlaufweiche wieder zurück auf das vorgeschaltete Einlaufband gefördert werden. Die Rückführung der Produkte erfolgt auf der untersten Pufferbandebene entgegen der Haupttransportrichtung. Somit wird der einlaufende Produktfluss auf den oberhalb der Einlaufebene liegenden Pufferbändern in Haupttransportrichtung aufgepuffert und dann über die hintere zweite Bandweiche auf die unterste Pufferbandebene umgeleitet, um dann entgegen der Haupttransportrichtung wieder zur Einlaufseite zu gelangen.

Damit kann ein ständiges Reversieren auf den Pufferbändern vermieden werden und der Produktfluss wird im FiFo-Prinzip durch den Bandpuffer geleitet. Das Reversieren reduziert sich auf die dem Bandpuffer vor -und nachgeschalteten Bänder 3 und 4. Da diese Bänder jedoch horizontal liegen ist der Reversierbetrieb nicht so kritisch wie bei geneigten Bändern, da die Haftung der Produkte auf den horizontalen Bändern maximal ist. Dadurch ist ein mögliches Verrutschen der Produktreihen stark reduziert und somit die Effizienz des Bandpuffers massiv erhöht.

### Bezugszeichenlegende

- 1: Förderband
- 2: Förderband
- 3,3': Einlaufband
- 4,4': Auslaufband
- 5, 5', 5", 5'": einlaufseitige Bandumlenkungen
- 6, 6', 6", 6'": auslaufseitige Bandumlenkungen
- 7: Chassis
- 8: Steuereinheit
- 9: Ausschleusband
- 10, 10', 10", 10‴: Antrieb
- 11: Hubmechanik
- 12, 12': Kopplungsstreben
- 13, 13': Produkte
- 14: Lücke

- T: Haupttransportrichtung

## Patentansprüche

1. Bandpuffer für eine Produktfördereinrichtung, die Produkte (13) von einer Produktionsanlage mittels Förderbändern (1, 2) zu wenigstens einer Weiterverarbeitungsanlage fördert, wobei der Bandpuffer wenigstens zwei Pufferbänder aufweist, die Produkte (13) speichern und vertikal übereinander angeordnet sind, wobei die Pufferbänder jeweils eine vertikal schwenkbare Bandumlenkung zum wahlweisen Anschliessen an ein Förderband aufweisen, **dadurch gekennzeichnet, dass**
die Pufferbänder jeweils einlaufseitig eine erste vertikal schwenkbare Bandumlenkung (5) zum wahlweisen Anschliessen an ein Einlaufband (3) und auslaufseitig eine zweite vertikal schwenkbare Bandumlenkung (6) zum wahlweisen Anschliessen an ein Auslaufband (4) aufweisen.

2. Bandpuffer nach Anspruch 1 umfassend ein Einlaufband (3) und ein Auslaufband (4), wobei das Einlaufband (3), die Pufferbänder und das Auslaufband (4) in Serie hintereinander angeordnet sind.

3. Bandpuffer nach Anspruch 1 oder 2, **dadurch gekennzeichnet, dass** die einlaufseitige Bandumlenkung (5) und die auslaufseitige Bandumlenkung (6) unabhängig voneinander steuerbar, insbesondere unabhängig voneinander schwenkbar, sind.

4. Bandpuffer nach einem der vorhergehenden Ansprüche, **dadurch gekennzeichnet, dass** wenigstens zwei vertikal übereinander angeordnete Bandumlenkung (5, 5'; 6, 6') miteinander gekoppelt sind.

5. Bandpuffer nach einem der vorherigen Ansprüche, **dadurch gekennzeichnet, dass** das Einlaufband (3) und das Auslaufband (4) auf einer Ebene angeordnet sind.

6. Bandpuffer nach einem der vorhergehenden Ansprüche, **dadurch gekennzeichnet, dass** schwenkbare Bereiche der Pufferbänder, die unterhalb einer Ebene des Einlaufbands (3) und/oder des Auslaufbands (4) angeordnet sind, als autonome Förderbänder ausgebildet sind.

7. Bandpuffer nach einem der vorhergehenden Ansprüche, **dadurch gekennzeichnet, dass** zumindest das unterste der Pufferbänder und das Auslaufband (4) reversibel antreibbar ausgebildet sind.

8. Bandpuffer nach einem der vorhergehenden Ansprüche, **dadurch gekennzeichnet, dass** die einlaufseitigen Bandumlenkungen (5) vertikal über das Einlaufband schwenkbar sind.

9. Bandpuffer nach einem der vorhergehenden Ansprüche, **dadurch gekennzeichnet, dass** die Pufferbänder jeweils ein horizontales stationäres Förderchassis (7) aufweisen, an dessen einer Seite die einlaufseitige Bandumlenkung (5) und an dessen anderer Seite die auslaufseitige Bandumlenkung (6) schwenkbar gelagert sind.

10. Bandpuffer nach einem der vorhergehenden Ansprüche, **dadurch gekennzeichnet, dass** zwei Einlaufbänder (3, 3') und/oder zwei Auslaufbänder (4, 4') jeweils vertikal übereinander angeordnet sind, wobei jedes der Einlaufbänder und/oder der Auslaufbänder an wenigstens zwei übereinander angeordnete einlaufseitige Bandumlenkung (5), bzw. auslaufseitige Bandumlenkung (6) anschliessbar ist.

11. Produktfördereinrichtung, die Produkte (13) von einer Produktionsanlage entlang einer Produktionslinie mittels Förderbänder (1, 2) zu wenigstens einer Weiterverarbeitungsanlage fördert und in der Förderlinie einen Bandpuffer zum Zwischenspeichern von Produkten (13) nach einem der vorhergehenden Ansprüche aufweist.

12. Produktfördereinrichtung nach Anspruch 11, **dadurch gekennzeichnet, dass** der Bandpuffer zwischen der Produktionsanlage und der Weiterverarbeitungsanlage vorgesehen ist und eine Einlaufförderrichtung von der Produktionsanlage einer Auslaufförderrichtung zur Weiterverarbeitungsanlage entspricht.

13. Produktfördereinrichtung nach Anspruch 11, **dadurch gekennzeichnet, dass** der Bandpuffer am Ende der Förderlinie hinter der Produktionsanlage und hinter Produktaustragsstationen, die Produkte von der Förderlinie zu einer Weiterverarbeitungsanlage ableiten, vorgesehen ist und dass eine Auslaufförderrichtung aus dem Bandpuffer entgegengesetzt einer Einlaufförderrichtung in den Bandpuffer vorliegt.

14. Verfahren zum Zwischenspeichern von Produkten (13) während einer Produktförderung durch eine Produktfördereinrichtung nach einem der Ansprüche 11 - 13, wobei ein Produkteinlauf in den Bandpuffer und ein Produktauslauf aus dem Bandpuffer von unterschiedlichen vertikal übereinander angeordneten Pufferbändern erfolgt.

15. Verfahren zum Zwischenspeichern von Produkten nach Anspruch 14, wobei Produkte (13) über das Einlaufband (3) in einer Förderrichtung auf eine einlaufseitige Bandumlenkung (5) eines Pufferbandes dem Bandpuffer zugeführt werden und Produkte (13) von einem anderen Pufferband über die auslaufseitige Bandumlenkung (6) des anderen Pufferbands über das Auslaufband (4) in derselben oder entgegengesetzten Förderrichtung abgeführt werden.

16. Verfahren zum Zwischenspeichern von Produkten nach Anspruch 14 oder 15, wobei ein Einspeichern in den Bandpuffer und ein Ausspeichern aus dem Bandpuffer unabhängig voneinander gesteuert wird.
